# EUROPEAN PATENT SPECIFICATION

(11) **EP 1 441 068 B1**
(45) Date of publication and mention of the grant of the patent: **16.04.2008**
(21) Application number: 04250024.9
(22) Date of filing: 06.01.2004
(51) Int. Cl.: E01C 13/06, C04B 41/48, C09D 5/14, C09D 167/00

(54) **Anti-slip panels**
Antigleitplatte
Panneau anti-dérapage

(30) Priority: 27.01.2003 GB 0301878
(43) Date of publication of application: 28.07.2004
(73) Proprietor: ILLINOIS TOOL WORKS INC., Glenview, Illinois 60025 (US)
(72) Inventor: Kettlewell, Neil, Leeds LS26 8BS (US)
(74) Representative: Weston, Robert Dale

(56) References cited:
- WO-A-03/043421
- GB-A- 2 297 552
- US-B1- 6 248 342
- PATENT ABSTRACTS OF JAPAN vol. 1996, no. 04, 30 April 1996 (1996-04-30) & JP 7 316473 A (ABC TRADING CO LTD), 5 December 1995 (1995-12-05)

## Description

This invention relates to anti-slip floor surfaces such as pre-formed panels and treads and applied floor coatings.

Known anti-slip flooring surfaces comprise an aggregate of hard, sharp particles, such as aluminium oxide or silicon carbide, bonded with a hard, non-resilient bonding agent; such as an epoxy resin. Such surfaces provide long term, hardweaiing, essentially rigid, anti-slip properties and have to be chemically and abrasion resistant. The very nature of such surfaces is that foreign material, debris, dirt and the like is readily trapped on the surface between the aggregate particles and can be difficult or impossible to completely clean. This is not usually a problem provided that the aggregate particles still project from the surface and the anti-slip properties thereby retained. However, it can be a problem where high levels of hygiene need to be maintained; such as in food related areas, e.g. breweries and food processing facilities. The rough characteristics required for anti-slip floor surfaces conflict with the smooth, even, easy clean surfaces required for hygiene maintenance.

Document FR-A-2561639 discloses coverings for sports area to give a porous, supple, non-slip surface and including 0.3 to 1.1 parts by weight of an unspecified biocide in an aqueous composition.

Document WPI abstract accession no. 1966-056204 [06] and JP 7316473 relates to an anti-microbial surface for hospitals etc where the bonding agent is for example an epoxy resin, urethane resin, pmma, etc. and 0.5-5wt % of a fine particulate metallic-ion-antimicrobial agent is dispersed in the bonding agent so as to rise to the surface thereof.

It is an object of the present invention to provide a, hard, essentially rigid anti-slip surface with improved hygienic characteristics.

According to the present invention, an anti-slip surface comprises an aggregate of sharp, wear-resistant particles bonded with a rigid, non-resilient bonding agent and a given anti-microbial agent is incorporated with the bonding agent in a concentration greater than specified for said given anti-microbial agent; so as, in use, to maintain a 99.9% reduction in bacterial growth for the design life of the surface:

The above-referred documents either only disclose the incorporation of an unspecified anti-microbial agent in a supple sports non-slip surface covering or a lightweight anti-microbial particulate anti-slip surface.

The conventional treatment of anti-slip flooring surfaces where hygiene is important is to regularly apply an anti-microbial coating to the surface and/or incorporate an anti-microbial agent in cleaning materials. To date anti-microbial agents have not been incorporated in rigid, wear-resistant anti-slip floor surfaces or applied floor coatings.

In contradistinction, the present invention is directed towards a rigid anti-slip floor surface wherein effective microbiostatic activity is maintained throughout the design life of an essentially wear-resistant surface which does not wear away or flex in use; to thereby expose further, unused anti-microbial agent.

The anti-microbial agent is incorporated with the bonding agent in greater than specified concentrations. Initial experimentation using concentrations of a given anti-microbial agent in accordance with the manufacturer's specifications failed to be effective. Contrary to usual practise relating to the use of biocides, experimentation with higher than specified concentrations unexpectedly resulted in an anti-slip surface that was and remained effective. One possible explanation is that a greater than expected concentration is needed to provide porosity in the bonding agent such that unused anti-microbial agent within the body of the bond migrates to the exposed surface of the anti-slip surface to provide micro-biostatic activity.

In a further embodiment of the present invention, the anti-microbial agent is 2,4,4-trichloro-2-hydroxy-diphenyl-ether (Triclosan^{TM}). Specified concentrations of this agent for interior applications are loadings are of the order of 0.01-0.02%. For exterior applications loadings of the order of 0.2% up to 0.5% are specified. In the present invention greater than 1.0% by weight of this anti-microbial agent is incorporated with the bonding agent during manufacture of the anti-slip surface. Typically 1.4% by weight of this anti-microbial agent is added, preferably, greater that 1.6% by weight of this anti-microbial agent is incorporated.

The above and further features of the present invention claimed in appended claims 2 to 6 and are illustrated by the following examples:-

### Example I (an anti-slip panel)

i) A working surface comprises a sheet of weather resistant, glass reinforced, rigid unsaturated polyester plastic based on an orthophthalic resin filled with e-glass fibre, 2000-3000 mm long x 1000-2000 mm wide x 3-3.5 mm thick.
ii) An anti-microbial,
   Generic name: Triclosan^{TM}
   Chemical name: 2,4,4-trichloro-2-hydroxy-diphenyl-ether was added to a concentration of 1.6% by weight to a base resin, an unsaturated polyester based on an orthophthalic resin.
iii) The mixture was then applied as an adherent coating to the working surface with a coverage of approximately 0.1-0.15 kg.m⁻² and aluminium oxide aggregate particle size 0.85-1.7 mm was sprinkled onto the coating with a coverage of 1.8-2.0 kg.m⁻² ; to produce a covering thickness of between 1 and 3 mm, of which up to 2.7 mm will be aggregate.
iv) The coating was then permitted to cure and further excess aggregate was brushed off.
v) The coated surface was over-coated with a further resin/anti-microbial mixture with a coverage of 0.45-0.50 kg.m⁻².
vi) The finished panel was then independently tested on AATCC 100 (American Association of Textile Chemists and Colorists) method, using:-
   Salmonella typhimurium NCTC 5710
   Listeria monocytogenes NCTC 10357
   Staphylococcus aureus ATCC 6538
   Escherichia coli NCTC 8196.
   Bacterial growth was reduced by 99.9%

### Example II - a floor coating

An anti-microbial agent is incorporated with an applied, two-part epoxy, broadcast floor coating system with a concentration of greater than 1.0% by weight, and preferably greater than 1.6% by weight. This anti-microbial agent provides and maintains an effective reduction in bacterial growth for the design life of the surface.

Alternative anti-microbial agents could be used, again in concentrations significantly in excess of manufacturer's specifications.

## Claims

1. An anti-slip surface comprising an aggregate of sharp, wear-resistant particles bonded with a rigid, non-resilient bonding agent and an anti-microbial agent incorporated with the bonding agent **characterised in that**
a) the wear-resistant particles are an aluminium oxide or silicon carbide aggregate; and,
b) a given anti-microbial agent is incorporated with the bonding agent at a concentration greater than specified for said given anti-microbial agent; so as, in use, to maintain a 99.9% reduction in bacterial growth for the design life of the surface.

2. A surface as claimed in claim 1 **and further characterised in that** the anti-microbial agent is 2,4,4-trichloro-2-hydroxy-diphenyl-ether and greater than 1.0% by weight of said anti-microbial agent is incorporated with the bonding agent during manufacture of the anti-slip surface.

3. A surface as claimed in claim 2 **and further characterised in that** greater than 1.6% by weight of said anti-microbial agent is incorporated.

4. A floor panel incorporating an anti-slip surface and further **characterised in that** the floor panel has an anti-slip surface as claimed in any of claims 1 to 3..

5. A panel as claimed in claim 4 **and further characterised in that:-**
the anti-slip coating comprises:-
a) the bonding agent is an unsaturated polyester based on an orthophthalic resin;
b) the wear-resistant particles are an aluminium oxide aggregate; and,
c) greater than 1.0% by weight of 2,4,4-trichloro-2-hydroxy-diphenylether;
and,
d) the floor panel comprises a sheet of glass reinforced, rigid, unsaturated polyester plastic.

6. A panel as claimed in claim 5 **and further characterised in that** the anti-slip coating is over-coated with a mixture of the bonding agent and said anti-microbial agent.

## Patentansprüche

1. Antirutschoberfläche, umfassend ein Aggregat von scharfen, abriebfesten Teilchen, die mit einem steifen, nichtelastischen Bindemittel gebunden sind, und ein antimikrobielles Mittel, des mit dem Bindemittel eingearbeitet ist, **dadurch gekennzeichnet, daß**
a) es sich bei den abriebfesten Teilchen um Aluminiumoxid- oder Siliciumcarbid-Aggregat handelt und
b) ein gegebenes antimikrobielles Mittel in einer größeren Konzentration als für das antimikrobielle Mittel spezifiziert mit dem Bindemittel eingearbeitet ist, so daß im Gebrauch eine 99,9%ige Reduktion des Bakterienwachstums über die vorgesehene Lebensdauer der Oberfläche aufrechterhalten bleibt.

2. Oberfläche nach Anspruch 1 und ferner **dadurch gekennzeichnet, daß** es sich bei dem antimikrobiellen Mittel um 2,4,4-Trichlor-2-hydroxydiphenylether handelt und bei der Herstellung der Antirutschoberfläche mehr als 1,0 Gew.-% des antimikrobiellen Mittels mit dem Bindemittel eingearbeitet wird.

3. Oberfläche nach Anspruch 2 und ferner **dadurch gekennzeichnet, daß** mehr als 1,6 Gew.-% des antimikrobiellen Mittels eingearbeitet werden.

4. Fußbodenpaneel mit einer Antirutschoberfläche und ferner **dadurch gekennzeichnet, daß** das Fußbodenpaneel eine Antirutschoberfläche gemäß einem der Ansprüche 1 bis 3 aufweist.

5. Paneel nach Anspruch 4 und ferner **dadurch gekennzeichnet, daß**:
die Antirutschbeschichtung folgendes umfaßt:
a) bei dem Bindemittel handelt es sich um einen ungesättigten Polyester auf Basis eines Orthophthalsäureharzes;
b) bei den abriebfesten Teilchen handelt es sich um ein Aluminiumoxid-Aggregat;
c) mehr als 1,0 Gew.-% 2,4,4-Trichlor-2-hydroxydiphenylether;
und
d) das Fußbodenpaneel ein Flächengebilde aus glasverstärktem, steifem Kunststoff auf Basis von ungesättigtem Polyester umfaßt.

6. Paneel nach Anspruch 5 und ferner **dadurch gekennzeichnet, daß** die Antirutschbeschichtung mit einer Mischung des Bindemittels und des antimikrobiellen Mittels überzogen ist.

## Revendications

1. Surface anti-dérapage comprenant un agrégat de particules tranchantes résistantes à l'usure liées à l'aide d'un agent liant rigide non élastique et d'un agent antimicrobien incorporé à l'agent liant, **caractérisée en ce que**
a) les particules résistantes à l'usure sont un agrégat d'oxyde d'aluminium ou de carbure de silicium ; et
b) un agent antimicrobien donné est incorporé à l'agent liant à une concentration supérieure à celle stipulée pour ledit agent antimicrobien, de façon à maintenir, en cours utilisation, une réduction de 99,9 % de la croissance bactérienne pour la durée de vie prévue de la surface.

2. Surface selon la revendication 1, **caractérisée en outre en ce que** l'agent antimicrobien est du 2,4,4-trichloro-2-hydroxy-diphényl-éther et **en ce que** plus de 1,0 % en poids dudit agent antimicrobien est incorporé à l'agent liant pendant la fabrication de la surface anti-dérapage.

3. Surface selon la revendication 2, **caractérisée en outre en ce que** plus de 1,6 % en poids dudit agent antimicrobien est incorporé.

4. Panneau de plancher incorporant une surface anti-dérapage, **caractérisé en outre en ce que** le panneau de plancher possède une surface anti-dérapage selon l'une quelconque des revendications 1 à 3.

5. Panneau selon la revendication 4, **caractérisé en outre en ce que** :
le revêtement anti-dérapage comprend :
a) un polyester non saturé basé sur une résine orthophtalique en tant qu'agent liant ;
b) un agrégat d'oxyde d'aluminium en tant que particules résistantes à l'usure ; et
c) plus de 1,0 % en poids de 2,4,4-trichloro-2-hydroxy-diphényl-éther ; et
d) un plastique de polyester non saturé, rigide et renforcé à la fibre de verre en tant que panneau de plancher.

6. Panneau selon la revendication 5, **caractérisé en outre en ce que** le revêtement anti-dérapage est lui-même recouvert d'un mélange de l'agent liant et dudit agent antimicrobien.
